(19) **Europäisches Patentamt / European Patent Office / Office européen des brevets**

(11) **EP 2 053 720 A1**

(12) # DEMANDE DE BREVET EUROPEEN

(43) Date de publication:
**29.04.2009 Bulletin 2009/18**

(51) Int Cl.:
***H02J 7/14*** *(2006.01)*

(21) Numéro de dépôt: **08157321.4**

(22) Date de dépôt: **30.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **04.06.2007 FR 0755433**

(71) Demandeur: **Peugeot Citroën Automobiles SA 78943 Vélizy-Villacoublay Cedex (FR)**

(72) Inventeurs:
• **Bensaied, Moez**
  **75018, PARIS (FR)**
• **Hallaire, Maximilien**
  **24490, LA ROCHE-CHALAIS (FR)**

(74) Mandataire: **Vigand, Régis Louis Michel**
**PSA Peugeot Citroën**
**Propriété Industrielle (LG081)**
**18, Rue des Fauvelles**
**92250 La Garenne Colombes (FR)**

(54) **Dispositif d'interface de compensation de tension à base de stockage de l'energie sous forme capacitive et réseau electrique comprenant ce dispositif**

(57) L'invention concerne un dispositif d'interface entre une première partie (A) et une seconde partie (B) d'un réseau, la première partie (A) de réseau étant reliée à une source (1) d'alimentation électrique, caractérisé en ce qu'il comprend un circuit (3a) qui est couplé entre les deux parties de réseau (A, B) en cas d'une chute de la tension dans la première partie de réseau résultant d'un fonctionnement perturbé du réseau pour produire à partir du stockage de l'énergie sous forme capacitive dans un supercondensateur et assurer la mise en série d'une tension de compensation (Vs) régulée, entre les deux parties de réseau (A, B) obtenue à partir de la chute de tension dans la première partie du réseau, de façon à maintenir constante la tension dans la seconde partie du réseau.

Applications aux réseaux électriques en continu, notamment un réseau de bord pour véhicule automobile.

Fig.2

EP 2 053 720 A1

**Description**

La présente invention concerne d'une façon générale un système de régulation de tension sur les réseaux continus.

Plus particulièrement, la présente invention concerne un système de régulation de tension sur un réseau électrique de bord d'un véhicule automobile.

La puissance électrique embarquée sur les véhicules automobiles est de plus en plus importante, actuellement de l'ordre de 2 à 3 kW pour un réseau 12V. L'alimentation s'effectue sur essentiellement deux types d'éléments consommateurs :

- les éléments consommateurs dits classiques, par exemple l'éclairage, la signalisation (feux de croisement, phares), l'électronique de précision comme par exemple des calculateurs et/ou des ordinateurs, les organes d'affichage, par exemple écrans LCD d'ordinateur de bord et les circuits de contrôle moteur comme injection allumage électronique etc...
- les éléments consommateurs par impulsion de forte puissance, par exemple le démarreur, la direction assistée électrique, les soupapes électromagnétiques, le turbo compresseur électrique, les suspensions électriques, etc...

Les éléments consommateurs du deuxième groupe sont particuliers dans le sens où ils consomment des courants de très forte intensité pendant un temps relativement court, essentiellement par impulsions. Pour ordre d'idée, on pourra avoir des courants de 100 à 200 Ampères pendant une période de quelques millisecondes à quelques secondes.

On comprend que lorsqu'ils sont activés, ces éléments consommateurs par impulsion provoquent des chutes de tension brèves et intempestives du fait du haut ampérage requis et du temps de réponse de l'alternateur. Ces chutes de tension peuvent atteindre quelques volts. Les autres éléments consommateurs qui sont alimentés eux aussi sur ce même réseau de bord peuvent être perturbés par ces fortes chutes de tension. Ainsi, on notera par exemple que l'intensité lumineuse de la signalisation, phares ou feux de croisement, fluctue de manière sensible, que les ordinateurs de bord sur les modèles de véhicule haut de gamme peuvent avoir leur fonctionnement perturbé et que les écrans LCD d'affichage scintillent. On notera également, dans le cas des véhicules equipés de la fonction « stop and start », qu'au moment du redémarrage, la chute de tension provoque un « reset » de l'autoradio et de certains calculateurs stratégiques (ABS/ESP, Contrôle Moteur, Direction Assistée Electrique, Boitiers de Servitude ...) .

Il y a donc un risque d'altération de la sécurité (éclairage insuffisant, immobilisation lors d'un redémarrage sur véhicules STT), un risque d'endommagement de certains éléments consommateurs et une perception de défaut de qualité par l'usager. Il est en conséquence nécessaire de minimiser ces chutes de tension dans le réseau de bord du véhicule.

Il a donc été proposé dans l'état de la technique de nombreuses solutions pour compenser ces chutes de tension intempestives.

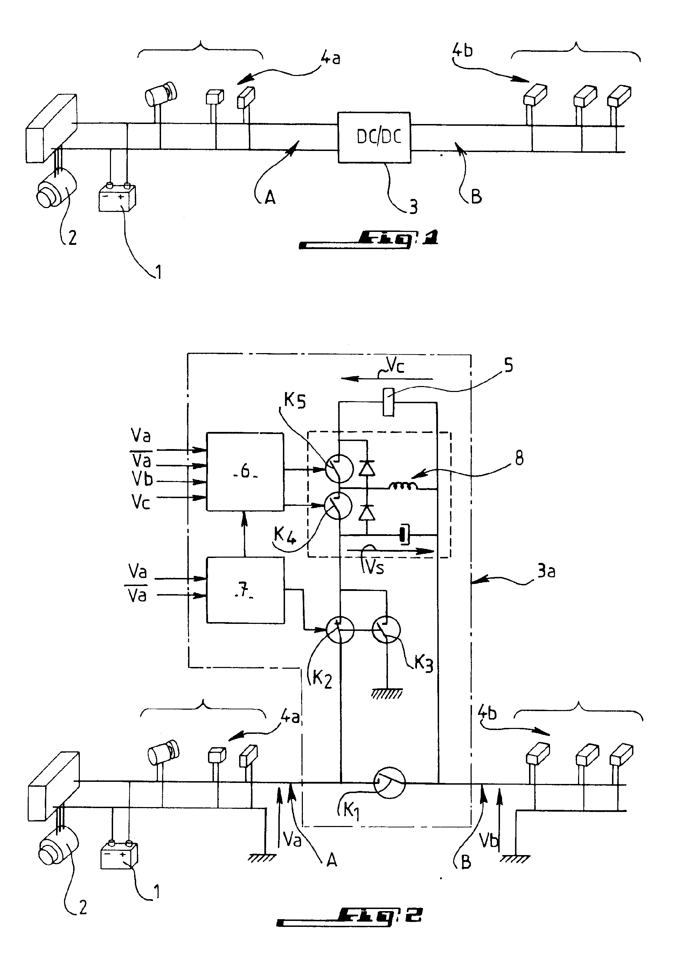

Une des solutions proposées est montrée à la figure 1. En se référant à cette figure, elle consiste à séparer le réseau de bord d'un véhicule, par exemple un réseau 12 Volts en deux sous-réseaux :

- un sous-réseau A dit sale sur lequel sont branchés les éléments consommateurs par impulsion dits perturbateurs 4a. Ce sous-réseau A supporte des perturbations importantes et alimente des éléments peu sensibles aux fluctuations de tension,
- un sous-réseau B dit propre sur lequel sont branchés les éléments consommateurs sensibles 4b. Ce sous-réseau alimente alors l'ensemble des éléments consommateurs qui exigent une bonne qualité de tension, comme les calculateurs, les écrans LCD, les feux de signalisation etc...

Un organe électronique 3 est alors prévu pour assurer le couplage entre ces deux sous-réseaux A et B tout en empêchant les perturbations issues du sous-réseau sale d'arriver sur le sous-réseau propre. Ce sous-réseau contient en outre une batterie 1 pour l'alimentation générale et un alternateur 2.

Dans une solution connue, il a été proposé de placer un convertisseur DC/DC 3 entre ces deux sous-réseaux, un tel convertisseur assurant au sous-réseau propre une tension constante quelle que soit la tension du sous-réseau sale. L'inconvénient de ce type de solution est le dimensionnement d'un convertisseur DC/DC pour alimenter l'ensemble des éléments consommateurs du réseau propre en permanence. Cela conduit à une solution technique coûteuse et à une perte d'énergie, le convertisseur devant fonctionner en permanence même quand il n'y a pas de perturbation sur le réseau.

Le document FR-A-2 729 901 décrit une unité de gestion d'énergie pour réseau électrique de véhicule automobile incorporant au moins deux unités de stockage d'énergie. La première unité est formée d'un supercondensateur destiné à alimenter des actionneurs puissants notamment durant la phase de démarrage, dans ce cas essentiellement le démarreur, ou dans la phase précédant le démarrage, dans ce cas par exemple une unité de préchauffage du pot d'échappement catalytique ou une unité de dégivrage rapide. Ces deux unités de stockage d'énergie sont commutées pour alimenter les équipements électriques au moment adéquat par exemple avant ou pendant le démarrage. Elles sont aussi rechargées à l'aide de l'alternateur en fonction normale. Pour ce faire l'unité de gestion comprend plusieurs parties de réseau, dont deux avec chacune une unité de stockage d'énergie, avec des moyens de commutation et leur commande aptes à relier sélectivement une partie de réseau avec une autre. Il n'y a pas de convertisseur de puissance permettant des fonctions de régulation de la tension ou du courant transitant à travers les divers réseaux. Avec cette unité de gestion, il n'est pas possible d'assurer une bonne qualité de tension sur les différents réseaux. Ainsi, si un équipement électrique puissant d'une des parties de réseau venait à être activé, il génèrerait des perturbations préjudiciables à l'ensemble des autres consommateurs présents sur les parties de réseau.

Le document US2005/0275289 décrit un dispositif assurant la fonction de couplage entre deux batteries d'un réseau de bord automobile, une batterie étant une batterie de puissance et l'autre une batterie de service. Les batteries peuvent être connectées ou déconnectées ensemble selon les conditions régnant sur le réseau. Ce document n'aborde pas le problème d'éléments consommateurs par impulsion se trouvant sur le réseau et pouvant amener les perturbations sur tout le réseau. Dans ce document, il n'est pas décrit de système de régulation de tension avec une réponse rapide aux perturbations de réseau. L'intérêt de séparer la fonction batterie en « puissance » et « énergie », est d'optimiser le dimensionnement de chacune des batteries pour minimiser le coût global.

Le principe du dispositif présenté dans ce document US2005.0275289 consiste à découpler les deux batteries durant les phases de démarrage (afin que seule la batterie de puissance contribue à faire démarrer le moteur) et les recoupler lorsque le moteur est lancé pour recharger la batterie de puissance.

Lorsque le moteur a démarré, ce dispositif ne peut pas du tout assurer un filtrage de la tension si des consommateurs impulsionnels venaient à être actifs.

Le document US-A-6 507 506 se destine aux réseaux automobiles comportant plusieurs niveaux de tension, comme par exemple 14V et 42V avec des batteries opérant à ces divers niveaux de tension. Un dispositif est prévu pour assurer la conversion d'énergie électrique entre les différents réseaux sous la forme d'un convertisseur de tension bi-directionnel et isolé intégré. Ce document montre un étage abaisseur dans un sens et élévateur dans l'autre. Avec un tel dispositif si un actionneur de forte puissance est activé dans un premier réseau, il va provoquer des perturbations préjudiciables pour les autres consommateurs de ce réseau et ces perturbations ne pourront pas être corrigées avec le dispositif de conversion d'énergie décrit dans ce document. Ce document a donc pour but de convertir l'énergie entre les deux réseaux avec un niveau de tension différent mais pas de compenser les perturbations apparues sur un réseau.

A ce jour aucune solution satisfaisante n'a été élaborée pour fournir un dispositif simple et efficace pouvant compenser les variations de tension dans un réseau électrique à courant continu à deux sous-réseaux distincts.

La présente invention a pour but d'assurer une fonction de couplage entre une partie de réseau dit sale et une partie de réseau dit propre remplaçant le traditionnel convertisseur DC/DC entre les deux parties de réseau et permettant une réponse rapide pour compenser les perturbations qui apparaissent sur la partie de réseau sale.

A cet effet, l'invention a pour objet un dispositif d'interface entre une première partie et une seconde partie d'un réseau, la première partie de réseau étant reliée à une source d'alimentation électrique, caractérisé en ce qu'il comprend un circuit qui est couplé entre les deux parties de réseau en cas d'une chute de la tension dans la première partie de réseau résultant d'un fonctionnement perturbé du réseau pour produire et assurer la mise en série d'une tension de compensation entre les deux parties de réseau obtenue à partir de la chute de tension dans la première partie du réseau, de façon à maintenir constante la tension dans la seconde partie du réseau.

La tension de compensation s'ajoute à la tension du point situé entre la première partie de réseau et le dispositif d'interface de manière à ce que la somme de tensions ainsi obtenue, qui est la tension au niveau du point situé entre le dispositif d'interface et la deuxième partie du réseau, soit maintenue constante. La tension de compensation est régulée de manière à compenser la chute de tension dans la première partie de réseau.

Le dispositif d'interface ne comporte pas de convertisseur de tension DC/DC au contraire de certains arts antérieurs.

Selon un mode préféré de la présente invention, le dispositif comprend un interrupteur monté en série entre les deux parties de réseau et le circuit de production de la tension de compensation est relié en parallèle à cet interrupteur de manière à insérer le circuit entre les deux parties du réseau lors de l'ouverture de l'interrupteur pour assurer la mise en série de la tension de compensation entre ces parties de réseau.

Le circuit de production de la tension de compensation du dispositif comprend :

- un élément auxiliaire de stockage d'énergie,
- un circuit de charge de cet élément auxiliaire de stockage d'énergie en fonctionnement normal du réseau,
- un circuit de décharge de cet élément auxiliaire de stockage d'énergie en fonctionnement perturbé du réseau se traduisant par la chute de la tension dans la première partie de réseau,
- une logique de commande pour insérer la tension de compensation en série $V_s$ entre les deux parties de réseau en régulant par des moyens de régulation la décharge de l'élément auxiliaire de stockage d'énergie en fonction de la chute de la tension $V_a$ de la première partie de réseau de manière à maintenir constante la tension $V_b$ de la seconde partie suivant l'équation :

$$Vb = Va + Vs$$

Préférentiellement, les circuits de charge et de décharge de l'élément auxiliaire de stockage comprennent des interrupteurs pouvant être commandés par la logique de commande pour placer l'élément auxiliaire de stockage d'énergie soit en position de charge, soit en position de décharge.

La logique de commande peut comporter des moyens disposés en amont et en aval de l'interrupteur en série pour mesurer respectivement la tension dans la première partie de réseau et la tension de la seconde partie de réseau et des moyens de production de signaux de commande des interrupteurs par comparaison des tensions mesurées.

Avantageusement, l'élément auxiliaire de stockage d'énergie est un supercondensateur.

Les interrupteurs peuvent être constitués par des éléments à semi-conducteurs, tels que des transistors.

L'invention concerne également un réseau comprenant une source d'alimentation électrique en courant continu et des éléments consommateurs à alimenter, les éléments consommateurs à alimenter étant regroupés en deux parties de réseau, la première partie de réseau comportant les éléments susceptibles d'apporter des perturbations et la seconde partie de réseau comportant des éléments dits sensibles nécessitant une tension constante d'alimentation, ce réseau comprenant entre ces deux parties de réseau un dispositif d'interface tel que précédemment décrit.

Le réseau peut être embarqué sur un véhicule automobile. Dans ce cas, la source d'alimentation en continu est une batterie en série avec en outre un alternateur.

L'invention va maintenant être décrite plus en détail mais de façon non limitative en regard des figures annexées, dans lesquelles :

- la figure 1 est une représentation schématique d'un réseau selon l'état de la technique ;
- la figure 2 est une représentation schématique d'un réseau avec un mode de réalisation du dispositif d'interface de compensation de tension conformément à l'invention ;
- la figure 3 est un schéma SABER du réseau avec le même mode de réalisation du dispositif d'interface qu'à la figure 2 ;
- la figure 4 est un graphique donnant les tensions des réseaux propre et sale en fonction du temps lors de la simulation d'une forte chute de tension sur le réseau sale ;

La figure 1 déjà été détaillée dans la présente description.

La figure 2 montre, qu'à la place du convertisseur DC/DC, la présente invention propose un dispositif d'interface à circuit de compensation de tension 3a permettant de produire et d'insérer une source de tension en série Vs à l'interface entre les deux parties de réseau, une dite partie sale A de réseau et l'autre partie propre B de réseau et donc de compenser les chutes de tension observées sur la partie sale A de réseau. Ainsi, une tension constante est assurée aux bornes des éléments consommateurs sensibles 4b qui ne sont plus soumis à des perturbations. Soit Va la tension de la partie A du réseau, Vb celle de la partie B du réseau et Vs la tension créée à l'interface on aura :

$$Vb = Va + Vs$$

De cette équation, on déduit que le dispositif d'interface 3a n'aura à délivrer une puissance que lorsque la partie de réseau A sera perturbé et non plus en permanence comme c'était le cas avec le convertisseur DC/DC précédemment. En l'absence de ces perturbations, le dispositif d'interface 3a est au repos contrairement au convertisseur 3 qui lui doit fournir une puissance constamment. Ainsi le dispositif d'interface 3a est bien moins coûteux en fonctionnement que le convertisseur 3 qui assurerait la même fonction.

Le dispositif d'interface 3a n'est donc pas un simple équivalent technique du convertisseur 3 mais présente un effet technique spécifique qui ne pouvait pas être obtenu par un convertisseur.

Le mode de réalisation du dispositif d'interface de compensation de tension 3a décrit comprend un supercondensateur 5 en tant qu'élément de stockage d'énergie auxiliaire. On rappelle qu'un supercondensateur est un condensateur de technologie particulière permettant d'obtenir une densité de puissance et une densité d'énergie intermédiaire entre les batteries et les condensateurs classiques.

Le supercondensateur est alors utilisé comme source d'énergie pour alimenter un convertisseur rapide chargé de fournir la tension de compensation si cela est nécessaire.

Ainsi, lorsque le dispositif est en train de compenser un creux de tension du à un actionneur impulsionnel, il puise l'énergie nécessaire dans le supercondensateur et ne prélève aucun courant supplémentaire sur le réseau de puissance. Le dispositif assurera après le passage de la perturbation, une recharge « lente » du supercondensateur.

Par contre, un convertisseur DC/DC classique, quelle que soit sa structure, pourrait assurer la régulation de la tension du réseau « sensible » mais il le ferait en prélevant un courant supplémentaire sur le réseau de « puissance ».

Cela procurera un grand avantage sachant qu'une telle chute de tension a déjà été précisée être très néfaste pour les éléments consommateurs 4b qui sont sensibles aux variations de tension.

Il convient d'utiliser un dispositif d'interface qui puisse permettre de charger le supercondensateur pendant les phases où la partie A de réseau est peu perturbée et de délivrer rapidement une source de tension Vs en cas de perturbation.

Pour ce faire, le dispositif d'interface 3a se compose essentiellement d'un circuit de charge, un circuit de décharge, une logique de commande 6,7 ainsi que des moyens de régulation de la tension ajoutée au réseau comprenant notamment un dispositif électronique de puissance comme il sera détaillé ci-après.

Le circuit de charge comprend deux interrupteurs K1 et K3 et deux interrupteurs K4 et K5. L'interrupteur K1 est monté en série entre les deux parties de réseau et le circuit de décharge dit aussi circuit de production de la tension de compensation Vs est relié en parallèle à cet interrupteur K1 de manière à insérer le circuit entre les deux parties A et B du réseau lors de l'ouverture de l'interrupteur K1 pour assurer la mise en série de la tension de compensation entre ces parties de réseau.

Pour ce faire, le circuit de décharge comprend aussi les deux interrupteurs K4 et K5 de même que l'interrupteur K2.

Les interrupteurs K1, K2, K3 sont commandés par le moyen de commande auxiliaire 7 qui commande la charge ou la décharge du supercondensateur 5 en fonction de la tension Va et la tension de référence Va. La logique de commande 6 travaille en fonction de Va, la tension sur la partie A de réseau, Vb la tension sur la partie B de réseau, Va la tension de référence qu'on doit maintenir sur la partie A de réseau et Vc, cette dernière étant la tension aux pôles du supercondensateur et étant égale à - Vs quand il n'y a pas de modulation de la tension ajoutée.

Lorsque la partie A de réseau n'est pas perturbée, l'interrupteur K1 est fermé pour alimenter les éléments consommateurs 4b de la partie B de réseau. L'interrupteur K2 qui est complémentaire à K1 reste alors ouvert tandis que K3 est fermé pour permettre la recharge du supercondensateur 5 par l'intermédiaire des interrupteurs K4 et K5. Ces derniers permettent de recharger le supercondensateur 5 avec un niveau de tension maîtrisé pour lisser le courant de recharge et les perturbations potentielles engendrées bien que cela ne soit pas le but du présent dispositif de charge et de décharge. Ceci est réalisé à l'aide du moyen de commande principal 6 de la logique de commande 6, 7 selon les valeurs de tension relevées et de moyens de régulation 8 de puissance. Ces moyens de régulation 8 de puissance peuvent comprendre des diodes de puissance, un condensateur et une inductance en parallèle comme montré à la figure 2. L'ajustement de la tension peut se faire par exemple mais non exclusivement par hachage et on peut maintenir la tension à un niveau constant en programmant les paramètres des différents éléments électroniques mis en jeu.

Avec une logique de commande et des moyens de régulation conformément à la présente invention, on obtient un asservissement de la tension avec une régulation au temps de réponse très rapide inférieur à la milliseconde. Avantageusement, les interrupteurs K1 à K5 sont constitués par des éléments semi-conducteurs, tels que des transistors.

Lorsque la partie sale A de réseau est perturbée, c'est-à-dire quand une chute de tension Va se produit, un autre composant de la logique de commande 6, 7 formant un moyen de commande auxiliaire 7 en accord avec le moyen de commande principal 6 va ouvrir l'interrupteur K1 reliant les parties A et B de réseau et fermer K2 pour venir insérer la tension Vs entre les deux parties A et B de réseau. La tension Vs est régulée grâce au moyen de commande principal 6 agissant sur les interrupteurs K4 et K5 et sur les moyens de régulation 8 de telle sorte que la tension Vb reste constante et ne subisse pas de variation importante.

Classiquement pour un véhicule automobile avec une batterie 12V sur le réseau de bord, la tension Vb est de 14V.

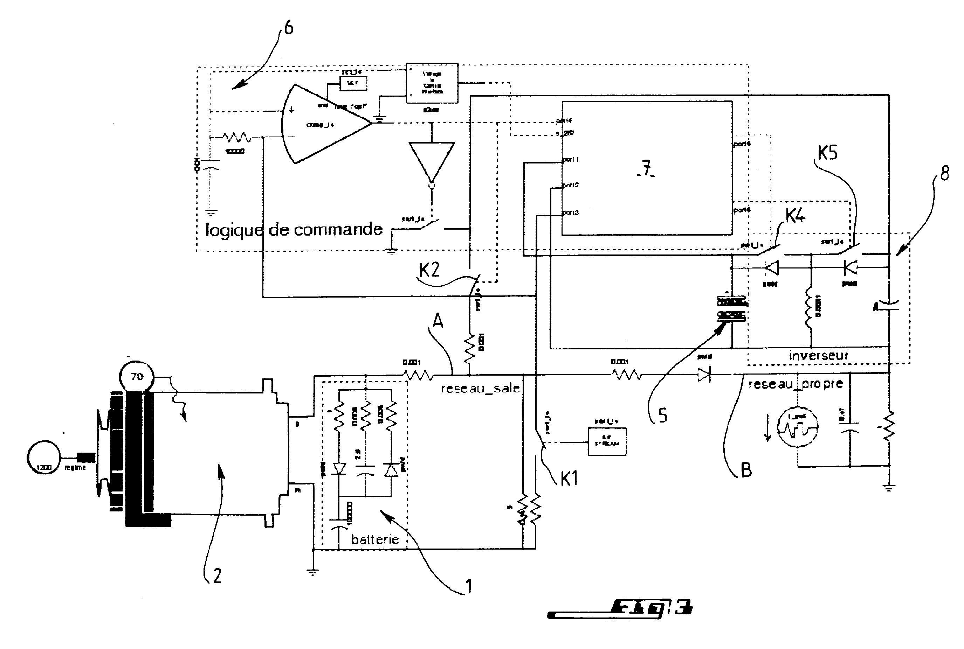

La figure 3 qui montre le schéma SABER permet de mieux comprendre le principe du dispositif d'interface de compensation de tension.

Sur ce schéma, la partie sale A de réseau est modélisée par un élément consommateur permanent qui est une résistance de 5 ohms et un élément consommateur non permanent sous la forme d'une résistance de 0,14 Ohms commandée par un interrupteur.

La partie propre B de réseau propre est, quant à elle, modélisée par une résistance permanente de 1 Ohm et par une source de courant qui va venir consommer un courant de 30 A pendant 0,4 seconde. Les résistances de ligne sont modélisées par des résistances de valeur 1milli Ohm.

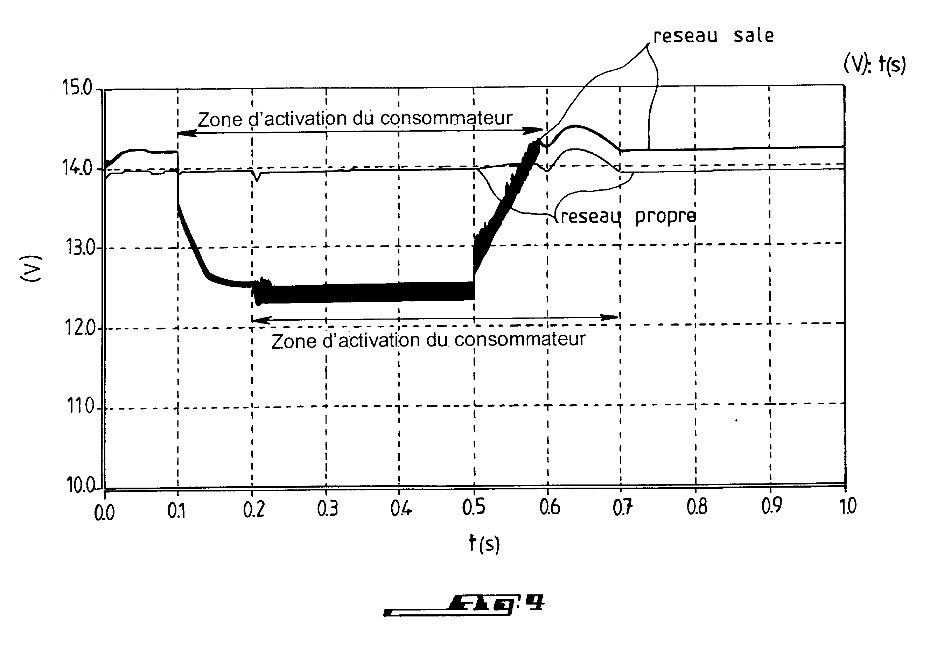

On constate que le dispositif d'interface 3a permet de découpler la partie propre B de réseau de la partie sale A de réseau lors de fortes chutes de tension dans cette dernière. Ceci peut être constaté au regard de la figure 4 qui montre une forte chute de tension sur la partie sale A de réseau de presque 2 Volts sans conséquence sur la tension sur la partie propre B de réseau.

Il permet aussi de palier des appels de courant sur la partie propre B de réseau en maintenant une tension stabilisée.

Accessoirement bien que le dispositif d'interface 3a ne soit pas conçu pour supprimer les pics de tension qui se produisent quand de gros éléments consommateurs sont déconnectés il peut néanmoins permettre de limiter ces pics de tension. En effet, comme le supercondensateur 5 du dispositif d'interface 3a se recharge dès la chute de tension terminée, il va prélever un courant sur le réseau ce qui provoquera la limitation des pics précédemment mentionnés. Cette limitation n'aura donc lieu uniquement que quand le supercondensateur 5 sera en phase de charge.

On notera qu'il est également possible d'insérer en amont du dispositif, des composants passifs du type varistance ou transil, qui se chargeront d'écrêter efficacement la tension du réseau afin que les équipements sensibles ne voient pas de surtension.

Ainsi le courant de charge est ajustable et peut donc être adapté à la charge du réseau pour limiter la chute de tension lors de la recharge.

L'invention n'est nullement limitée au mode de réalisation décrit et illustré qui n'a été donné qu'à titre d'exemple.

De même l'utilisation d'un tel dispositif d'interface n'est pas limitée pour un réseau de bord d'un véhicule automobile. Au contraire, un tel dispositif peut trouver une application pour divers appareils électroniques sensibles, notamment quand ils comportent des éléments impulsionnels gros consommateurs d'énergie. On pourra citer sans caractère limitatif principalement des équipements de communication, notamment des téléphones portables, par exemple des modules GPRS ou GMS, des cartes Flash ou PCMCIA, des composants pour ordinateur, ou divers appareils sans fil.

## Revendications

**1.** Dispositif d'interface entre une première partie (A) et une seconde partie (B) d'un réseau, la première partie (A) de réseau étant reliée à une source (1) d'alimentation électrique, **caractérisé en ce qu'**il comprend un circuit (3a) qui est couplé entre les deux parties de réseau (A, B) en cas d'une chute de la tension dans la première partie de réseau résultant d'un fonctionnement perturbé du réseau pour produire et assurer la mise en série d'une tension de compensation (Vs) entre les deux parties de réseau (A, B) obtenue à partir de la chute de tension dans la première partie du réseau, de façon à maintenir constante la tension dans la seconde partie du réseau.

**2.** Dispositif selon la revendication 1, **caractérisé en ce qu'**il comprend un interrupteur (K1) monté en série entre les deux parties de réseau (A, B) et **en ce que** le circuit (3a) de production de la tension de compensation (Vs) est relié en parallèle à cet interrupteur de manière à insérer le circuit (3a) entre les deux parties du réseau (A, B) lors de l'ouverture de l'interrupteur (K1) pour assurer la mise en série de la tension de compensation entre ces parties de réseau (A, B).

**3.** Dispositif selon la revendication 2, **caractérisé en ce que** le circuit (3a) de production de la tension de compensation comprend :

- un élément auxiliaire de stockage d'énergie (5),
- un circuit de charge de cet élément auxiliaire de stockage d'énergie (5) en fonctionnement normal du réseau,

- un circuit de décharge de cet élément auxiliaire de stockage d'énergie (5) en fonctionnement perturbé du réseau se traduisant par la chute de la tension (Va) dans la première partie de réseau (A),
- une logique de commande (6, 7) pour insérer la tension de compensation (Vs) en série entre les deux parties (A, B) de réseau en régulant par des moyens de régulation (8) la décharge de l'élément auxiliaire de stockage d'énergie (5) en fonction de la chute de la tension (Va) de la première partie (A) de réseau de manière à maintenir constante la tension (Vb) de la seconde partie (B) suivant l'équation :

$$Vb = Va + Vs$$

**4.** Dispositif selon la revendication 3, **caractérisé en ce que** les circuits de charge et de décharge de l'élément auxiliaire de stockage (5) comprennent des interrupteurs (K2, K3, K4, K5) pouvant être commandés par la logique de commande (6, 7) pour placer l'élément auxiliaire de stockage d'énergie (5) soit en position de charge, soit en position de décharge.

**5.** Dispositif selon la revendication 4, **caractérisé en ce que** la logique de commande (6, 7) comporte des moyens disposés en amont et en aval de l'interrupteur en série (K1) pour mesurer respectivement la tension (Va) dans la première partie (A) de réseau et la tension (Vb) de la seconde partie (B) de réseau et des moyens (6, 7) de production de signaux de commande des interrupteurs (K1 à K5) par comparaison des tensions mesurées.

**6.** Dispositif selon l'une des revendications 2 à 5, **caractérisé en ce que** l'élément auxiliaire de stockage d'énergie (5) est un supercondensateur.

**7.** Dispositif selon l'une quelconque des revendications 2 à 6, **caractérisé en ce que** les interrupteurs (K1 à K5) sont constitués par des éléments à semi-conducteurs, tels que des transistors.

**8.** Réseau comprenant une source d'alimentation électrique en courant continu et des éléments consommateurs (4a, 4b) à alimenter, les éléments consommateurs (4a, 4b) à alimenter étant regroupés en deux parties de réseau (A, B), la première partie de réseau (A) comportant les éléments (4a) susceptibles d'apporter des perturbations et la seconde partie de réseau (B) comportant des éléments dits sensibles (4b) nécessitant une tension constante d'alimentation, **caractérisé en ce qu'**il comprend entre ces deux parties (A, B) de réseau un dispositif d'interface (3a) selon l'une quelconque des revendications précédentes.

9.  Réseau selon la revendication 8, **caractérisé en ce qu'**il est embarqué sur un véhicule automobile, que la source d'alimentation en courant continu (1) est une batterie et qu'il comprend en outre un alternateur (2).

*Fig 1*

*Fig 2*

Fig. 3

Fig 4

Europäisches
Patentamt

European
Patent Office

Office européen
des brevets

**RAPPORT DE RECHERCHE EUROPEENNE**

Numéro de la demande

EP 08 15 7321

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2004/006422 A (SIEMENS) 15 janvier 2004 (2004-01-15) | 1-4,6-9 | INV. H02J7/14 |
| Y | * page 1, ligne 1 - page 21, ligne 26; figures 1-4 * ----- | 5 | |
| Y | DE 10 2004 038527 A1 (AUDI AG) 16 mars 2006 (2006-03-16) | 5 | |
| A | * page 1, colonne de gauche, ligne 1 - page 4, colonne de gauche, ligne 3; figure 1 * ----- | 1,6-9 | |
| X | DE 102 62 000 A1 (AUDI AG) 26 février 2004 (2004-02-26) * page 2, colonne de gauche, ligne 1 - page 5, colonne de droite, ligne 50; figures 1-6 * ----- | 1,8,9 | |
| A | FR 2 853 154 A (PEUGEOT) 1 octobre 2004 (2004-10-01) * page 1, ligne 1 - page 7, ligne 14; figure 1 * ----- | 1-4,6-9 | |

**DOMAINES TECHNIQUES RECHERCHES (IPC)**

H02J

Le présent rapport a été établi pour toutes les revendications

| Lieu de la recherche | Date d'achèvement de la recherche | Examinateur |
|---|---|---|
| Munich | 28 octobre 2008 | Calarasanu, Petre |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 15 7321

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

28-10-2008

| Document brevet cité au rapport de recherche | Date de publication | Membre(s) de la famille de brevet(s) | Date de publication |
|---|---|---|---|
| WO 2004006422 A | 15-01-2004 | DE 10230384 A1 | 29-01-2004 |
| DE 102004038527 A1 | 16-03-2006 | AUCUN | |
| DE 10262000 A1 | 26-02-2004 | AUCUN | |
| FR 2853154 A | 01-10-2004 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2729901 A
- US 20050275289 A
- US 6507506 A